# EUROPEAN PATENT APPLICATION

(11) **EP 1 344 961 A2**
(43) Date of publication of application: **17.09.2003**
(21) Application number: 03251445.7
(22) Date of filing: 11.03.2003
(51) Int. Cl.: F16G 13/04

(54) **Silent chain**

(30) Priority: 12.03.2002 JP 2002066354
(71) Applicant: BorgWarner Morse TEC Japan K.K., Nabari City Mie-Prefecture 518-0495 (JP)
(72) Inventor: Tsujii, Yoshitomo, Nabari, Mie 518-0495 (JP); Matsuura, Kenichi, Nabari, Mie 518-0495 (JP)
(74) Representative: Lerwill, John

(57) **Abstract**

A silent chain having improved wear resistance comprising link plates (2) that have a pair of pin holes (22) that are finished using a punch with a round edge portion, and connecting pins with a carbide layer formed on a the base material of the pin. The carbide layer includes vanadium carbide as the principal component and chromium carbide as the secondary component. The carbide layer is formed on the outermost surface of the base material. A boundary layer is formed in the boundary region between the carbide layer and the base material. The boundary layer includes vanadium carbide whose percentage content decreases sharply and chromium carbide whose percentage content increases sharply. Since the carbide layer formed on top of the base metal consists principally of vanadium carbide it is possible to prevent peeling from the surface of the carbide layer.

## Description

### FIELD OF THE INVENTION

The invention pertains to the field of silent chains. More particularly, the invention pertains to a silent chain having an increased wear resistance.

### DESCRIPTION OF RELATED ART

A silent chain is generally comprised of a plurality of link plates each having a pair of pin holes and teeth arranged in lateral and longitudinal directions, pivotably joined to each other by joining pins inserted in the pin holes. During operation of the silent chain, the links rotate and slide around the pins, causing the pins to wear. Various methods have been proposed to improve wear resistance of the pins.

Japanese patent publication no. 56-41370 describes a pin treated by the chromizing process, which coats the pin's surface layer with chromium carbide.

Japanese patent publication no. 10-169723 describes a pin coated with a surface layer of at least one carbide selected from chromium carbide, titanium carbide, vanadium carbide, and niobium carbide. This patent publication also describes a shaving process applied to the pin holes of a link plate. The shaving process involves chipping and cutting a rough surface created by blanking. By applying such a shaving process to the pin holes, most of the broken surfaces present inside the pin holes that were created at the time of piercing of the pin holes are removed. However, shaving itself is cutting work that only cuts the inner surface of the pin hole. Therefore, the surface roughness of the inner surface of the shaved pin hole is not satisfactory.

Furthermore, repeated wear resistance tests of a chromizing pin coated with chromium carbide (CrC), and a VC pin coated with vanadium carbide (VC) have been conducted by the inventors of the present application. It has been found that in the case of the chromizing pin in a repeated high surface pressure environment, exfoliation of the chromium carbide occurs on the surface of the chromium carbide coating, and during exfoliation wear to the pin increases. In the case of the vanadium carbide (VC) pin in a high surface pressure environment, exfoliation occurs on the boundary surface between the vanadium carbide layer and the pin base material. That is in this case, the entire vanadium carbide layer is exfoliated or flaked off, thereby increasing wear to the pin drastically. As a result from the repeated wear resistance tests, chromium carbide has a better fittability or bondability to the base material but a decreased amount of strength against surface pressure, whereas vanadium carbide has an increased amount of strength against the surface pressure because of rare surface exfoliation and poor fittability or bondability to the base material.

### SUMMARY OF THE INVENTION

The present invention is directed to a silent chain in which a plurality of link plates each having a pair of pin holes and teeth are interleaved in lateral and longitudinal directions and pivotably joined to each other by joining pins inserted in the pin holes.

In a first embodiment after the prepared holes of the pin holes are pierced each of the pin holes of the link plates are finished using a punch with a round edge portion at a tip thereof. As a result of the finishing, rough surfaces present on the inner surfaces of the pin holes are mashed to form finished surfaces, thereby improving surface roughness of the inner surfaces of the pin holes. As a result, during operation of a silent chain, surface pressure acted upon the inner surfaces of the pin holes is reduced and wear resistance improved.

A base material, or steel, for each of the pins is formed with carbide layer including vanadium carbide as its main component, and a small amount of chromium carbide. The carbide layer is formed on the outermost surface of the base material, and a boundary layer is formed in the boundary region between the carbide layer and the base material. The boundary layer contains vanadium carbide in a small quantity and chromium carbide in a large quantity.

Since the carbide layer having vanadium carbide is of higher bearing strength or surface pressure strength, it is formed on the outermost surface of the base material, surface exfoliation of the carbide layer is hard to occur even under the higher surface pressure, thereby improving wear resistance of the pins. Moreover, in this case, since the chromium-rich layer has a higher fittability or bondability to the base material and the vanadium carbide is formed in the boundary layer between the carbide layer and the base material, the carbide layer is hard to be flaked off from the base material even under the higher surface pressure, thereby further improving wear resistance of the pins.

In a second embodiment, after the prepared holes of the pin holes are pierced, each of the pin holes of the link plates is finished using a punch with a round edge portion at a tip thereof. The surface roughness of the inner surfaces of the pin holes can thus be improved and wear resistance increased.

A base material, or steel, for each of the pins has a carbide layer including at least any one selected from the group consisting essentially of vanadium carbide, titanium carbide, niobium carbide and tungsten carbide as its main component and a small amount of chromium carbide. The carbide layer is formed on the outermost surface of the base material. A boundary layer is formed in the boundary region between the carbide layer and the base material. The boundary layer has at least any one selected from the group consisting essentially of vanadium carbide, titanium carbide, niobium carbide and tungsten carbide whose percentage content decreases sharply and chromium carbide whose percentage content increases sharply.

Since the carbide layer including vanadium carbide, titanium carbide, niobium carbide or tungsten carbide of higher bearing strength or surface pressure strength is formed on the outermost surface of the base material, similar to the first embodiment, surface exfoliation of the carbide layer is hard to occur even under the higher surface pressure, thereby improving wear resistance of the pins. Moreover, in this case, since chromium-rich layer of higher fittability or bondability to the base material and the vanadium carbide is formed in the boundary layer between the carbide layer and the base material, in the same manner as the first embodiment, the carbide layer is hard to be flaked off from the base material even under the higher surface pressure, thereby further improving wear resistance of the pins.

In a third embodiment, each of the teeth of the link plates are formed of an inside flank and an outside flank. A crotch portion interconnects the inside flanks of the teeth, and opposite the teeth is a back portion. The teeth, crotch portion, and back portion are shaved simultaneously.

The shaving process of the teeth, crotch and back portion of the link plate are conducted at the same time. Thereby, at the time of shaving process, local force in the thickness direction of the link plate is not applied to the outer circumferential surface of the link plate. Strain or bending deformation of a link plate due to a shaving process can thus be restrained. As a result, the degree of parallelization of a pin hole of the link plate may be improved, thereby preventing partial wear of the pin hole to improve wear resistance.

### BRIEF DESCRIPTION OF THE DRAWING

Fig. 1 shows a top plan view of a portion of a silent chain according to the first embodiment.
Fig. 2 shows a front elevational view of a portion of the silent chain of figure 1.
Fig. 3 shows a schematic illustrating the blanking process of a link plate.
Fig. 4 shows a sectional view illustrating a finishing process of a pin aperture.
Fig. 5 shows a sectional view illustrating a finishing process of a pin aperture.
Fig. 6 shows a sectional view illustrating the conventional shaving process of the pin aperture.
Fig. 7 shows a sectional view illustrating the conventional shaving process of the pin aperture.
Fig. 8 shows a graph illustrating the composition of the connecting pin according to the present invention.
Fig. 9 shows a partial enlargement of Figure 8.
Fig. 10 shows a graph illustrating the composition of a conventional chromizing pin.
Fig. 11 shows a graph illustrating the composition of a conventional VC pin.
Fig. 12 is an example of a chain pine's wear test method.
Fig. 13 shows a graph showing the result of the wear test on the silent chain.

### DETAILED DESCRIPTION OF THE INVENTION

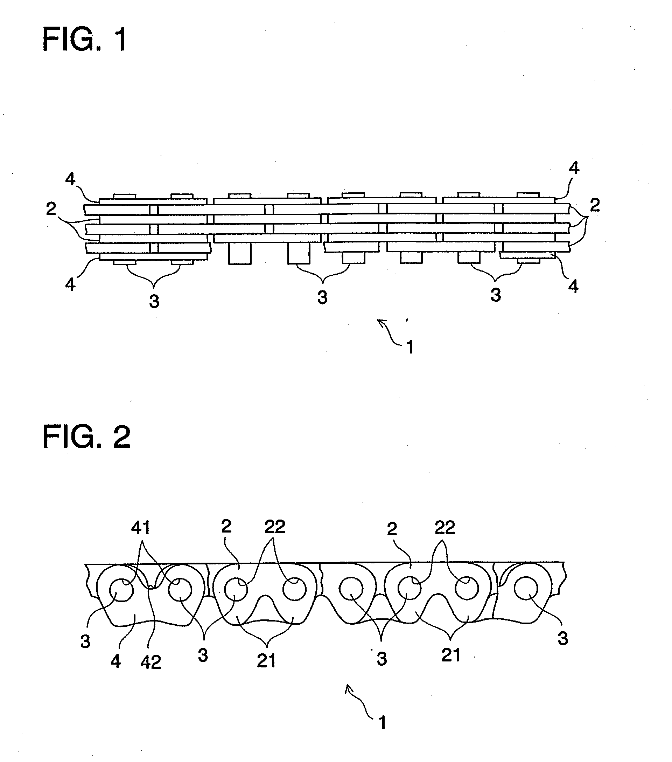

As shown in figures 1 and 2, a silent chain 1 is comprised of a plurality of link plates 2 each having a pair of teeth 21 and pin apertures 22, which are interlaced in lateral and longitudinal directions and pivotably joined to each other by connecting pins 3 inserted in the pin apertures 22. Guide links 4 are provided on the sides of the outermost link plates 2. Ends of the connecting pins 3 are press fit into the pin apertures 41 of the guide links 4. In figure 1, each guide link 4 is formed with a crotch portion 42 on its back side.

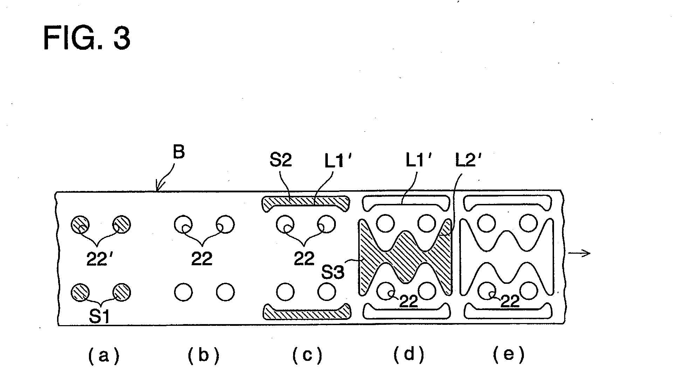

Figure 3 shows one example of a layout where two link plates are blanked at one time at each station (a) to (e). As blank sheet metal B travels in the direction marked by the arrow, predetermined steps are conducted at each of the stations (a) to (e). At the first station (a), the hatched portion S1 on the blank sheet metal B is pierced, resulting in a pair of prepared holes 22'. The hatched portion S1 indicates scrap-to-be.

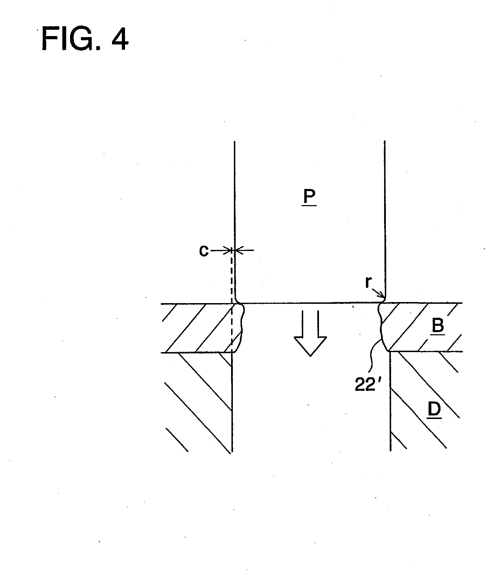

At the second station (b), the pair prepared holes 22' are finished. In this finishing process, shown in figure 4, the process is performed preferably by ironing and burnishing the inside of the prepared holes of the pin holes using a punch P with a round circumferential edge portion r on its distal end is used. The round edge portion of the punch helps the punch move downwardly faster than in the case of the burnishing process, thereby making the finishing process faster. As the punch P moves downwardly and upwardly relative to the prepared holes 22' of the blank sheet metal B placed on the die D, the round circumferential edge portion r of the punch P cuts and removes broken, rough surfaces that have been formed on the inner circumferential surface of the prepared holes 22'. At the same time, the round circumferential edge portion r of the punch P mashes and burnishes the rough surfaces of the inner circumferential surface of the prepared holes 22', thereby forming burnished pin apertures 22.

Since the finished surface of the pin apertures is formed by only one finishing process, high-speed finishing process can be achieved as compared with a case where shaving process and burnishing process are separately conducted. The surface roughness of the inner circumferential surface of the pin apertures is thus improved and wear resistance is advanced. In such a way, surface roughness of the pin apertures can be improved with decrease of the production efficiency restrained.

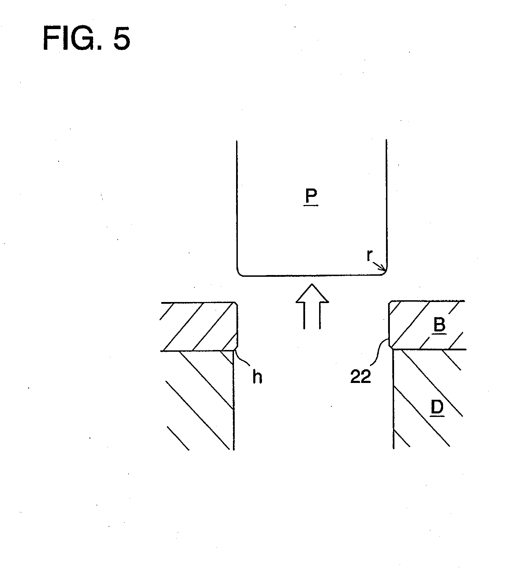

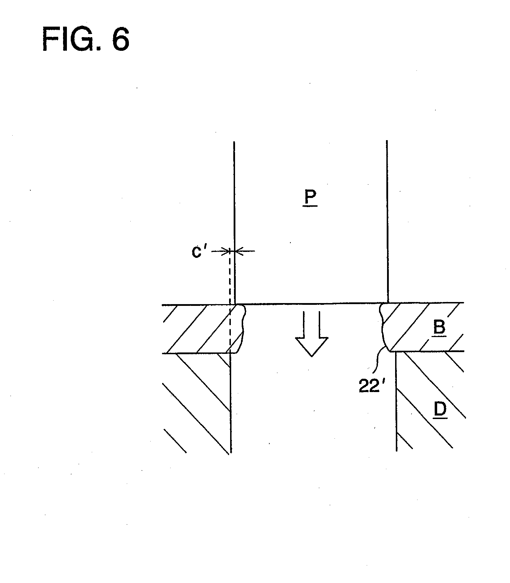

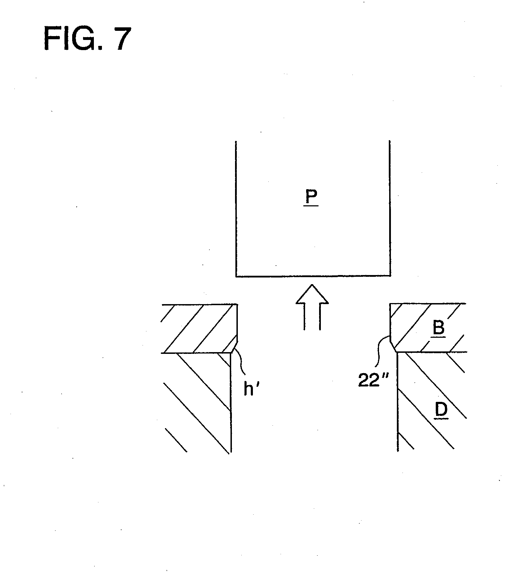

For the purpose of comparison to figures 4 and 5, a conventional shaving process as applied to prepared holes 22' is shown in figures 6 and 7. Referring to figures 6 and 7, a punch P with a pointed edge portion at its distal end is used. When such a punch P moves downwardly and upwardly relative to the prepared holes 22' of the blank sheet metal B on the die D, a broken rough surface that has been formed on the inner circumferential surface of the prepared holes 22' is cut and removed by the pointed edge portion of the punch P and the pin apertures 22" is achieved. However, in this shaving process, a clearance c' (see figure 6) between the punch P and the die D should be made relatively greater, and a longer broken surface h' appears after shaving.

Referring to figures 4 and 5 where the punch P with a round edge portion was used, a clearance c (see figure 4) between the punch P and the die D is relatively small i.e. c<c'. Thereby, breaking is hard to occur at the time of blanking and the length of the broken surface h inside the pin aperture 22 is smaller i.e. h<h'.

At the third station (c), back-blanking is conducted to form a back portion of the link plate. Back-blanking the hatched portion S2, a surface L1' is formed to constitute a back portion of a link plate.

At the fourth station (d), blanking the hatched portion S3 results in a W-shaped surface L2' is formed which constitutes the inside flank, the outside flank, and the crotch portion of the link plate.

Finally, at the fifth station (e), the surfaces L1' and L2' are shaved at the same time using shaving molds. The surfaces L1' and L2' are then cut and shaved surfaces are achieved. According to the above-mentioned blanking process, the shaving of the outer circumferential surface of the link plate, a pair of teeth, a crotch portion and a back portion of the link plate are shaved at the same time. Thereby, local force in the thickness direction is not applied to the outer circumferential surface of the link plate during shaving. As a result, occurrence of strain or bending deformation of a link plate due to shaving is restrained and the degree of parallelization of pin apertures of a link plate is improved.

The next process is the hardening process of the connecting pin. The first step is conducted within the temperature range of 800-900°C, where a chromium doping or penetrating process is applied to the base material of connecting pin 3, the base material being bearing steel or carbon steel for machine structural use preferably to form the chromium carbide layer of a few microns in thickness on the surface of the base material.

The second step is chromium and vanadium doping performed within the temperature range of 900-1000°C. Thereby, a mixed layer of vanadium carbide and chromium carbide is formed on the outermost surface of the base material i.e. the surface of the chromium carbide layer that has been formed at the first process. During formation of the mixed layer, vanadium carbide gradually penetrates the chromium carbide layer formed at the first process. This chromium and vanadium doping or penetrating process is conducted for a longer duration of time than the chromium doping process of the first step. As a result, the carbide layer, which is thicker than the chromium carbide layer and contains more vanadium than chromium, is formed on the surface of the base material.

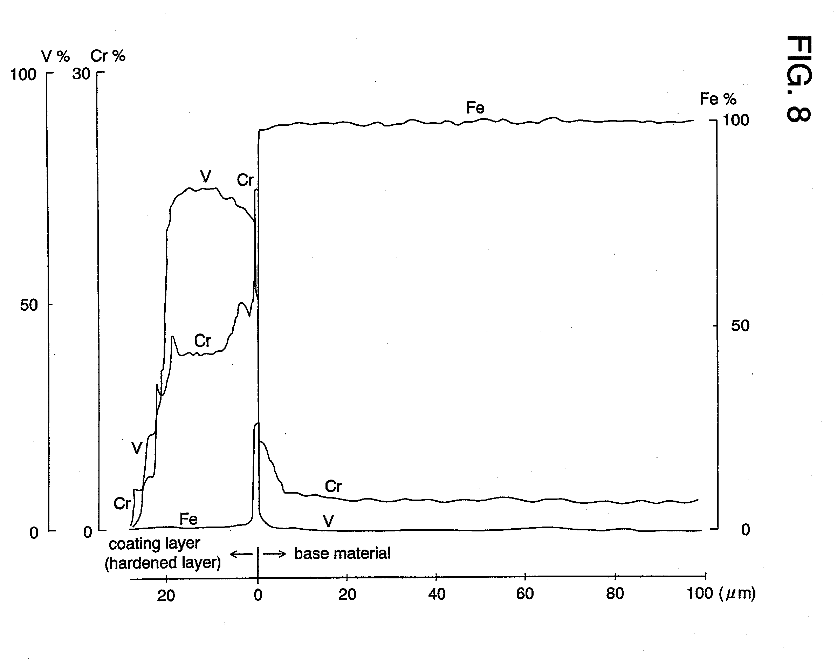

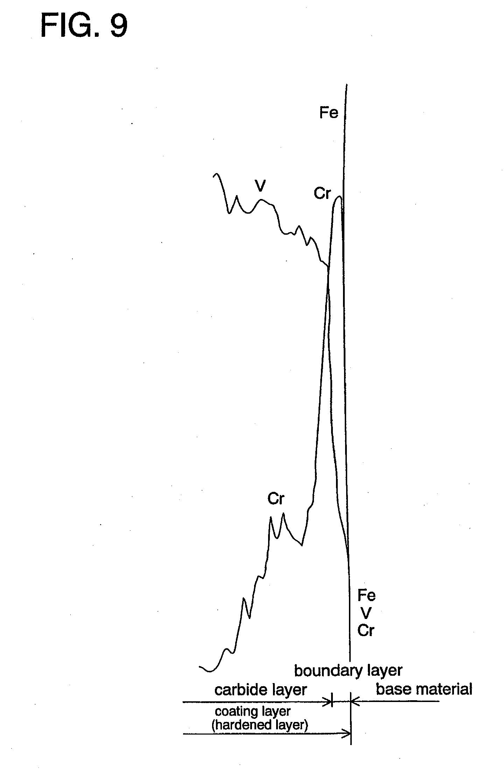

Composition of the connecting pin 3 that has been treated by the above-mentioned hardening process will be explained in accordance with figures. 8 and 9. These figures indicate the result of elementary analysis by X-ray analysis method through a wavelength-dispersive-type X-ray micro analyzer.

As shown in figure 8, on the outermost surface of the base material of the connecting pin, there is provided a carbide layer that has been formed as a result of the process in the second step and that contains vanadium carbide (V8C7) as its main component and a small amount of chromium carbide (CrnCm). In this case, the ratio of vanadium to chromium is generally 8.5 to 1.5.

As clearly seen in figure 9, in the boundary region between the carbide layer and the base material, a boundary layer is formed that contains vanadium carbide whose percentage content decreases sharply and chromium carbide whose percentage content increases sharply. The reason why the boundary layer is a chromium-rich layer of relatively large amount of chromium carbide is that the chromium doping process was conducted at the first process prior to the chromium and vanadium doping process. The carbide and boundary layers form a surface coating or hardened layer on the surface of the base material. The boundary layer of the pin preferably has a thickness of 10 microns of less.

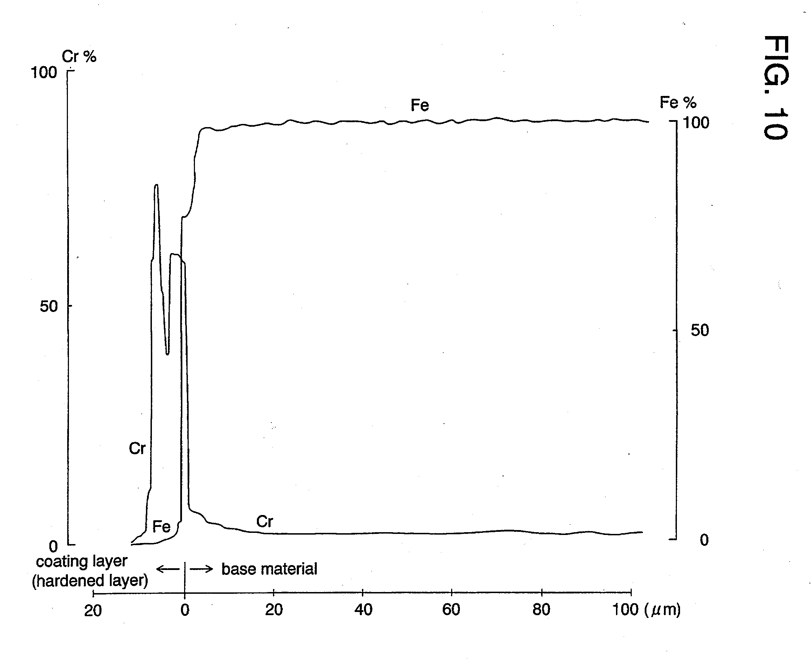

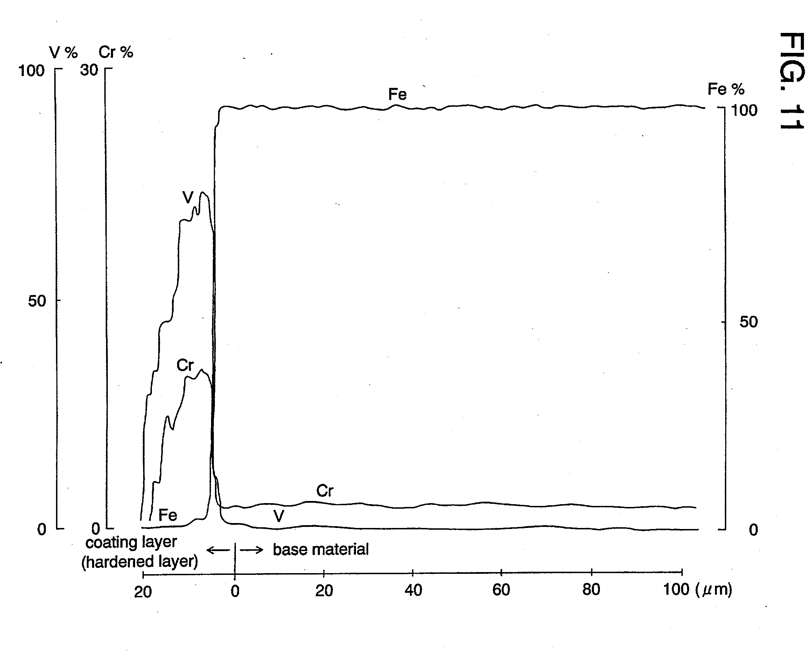

On the other hand, compositions of a conventional chromized pin and VC pin are shown in figures 10 and 11, respectively. These figures indicate the result of elementary analysis by X-ray analysis method through a wavelength-dispersive-type X-ray micro analyzer. Additionally, in a VC pin shown in figure 11, both vanadium doping and chromium doping have been conducted. As shown in figures 10 and 11, in a prior-art chromized pin as well as VC pin, percentage content of chromium carbide and vanadium carbide is sharply decreased in a boundary region between the carbide layer and the base material.

To the contrary, according to the embodiment of the present invention, the boundary layer between the base material and the carbide layer of a large amount of vanadium carbide is a chromium-rich layer where percentage content of the chromium carbide is sharply increased with percentage content of the vanadium carbide sharply decreased.

Table 1 shows a comparison of the results of a wear test of the connecting pin of the present invention with the result of a prior art or conventional VC pin as shown in figure 11.

**[Table 1]**

| Surface Pressure (kg/mm²) | Present invention | Prior Art |
|---|---|---|
| 40 | ○ | ○ |
| 70 | ○ | × |
| 100 | ○ | × |

| | | |
|---|---|---|
| ○: exfoliation did not occur | | |
| ×: exfoliation occurred | | |

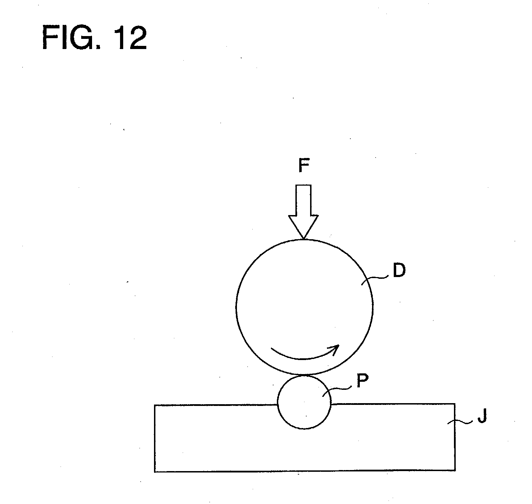

The method of wear test used here is shown in figure 12. Disk D rotating at a predetermined rotational speed is pressed with a predetermined force F against a pin P, a test piece, fixed on a jig J. After the test, it was checked to see whether there was any exfoliation of the hardened layer. As a result of such a wear test, in the present invention, shown in Table 1, exfoliation of the hardened layer did not occur even at the higher surface pressures of 70 kg/mm2 and 100 kg/mm2, but during the wear test of the prior art VC pin, exfoliation occurred at the surface pressure of 70 kg/mm2. This test proves that a pin of the present invention has a superior wear resistance as compared to the prior art of conventional pin. The difference between the pins, results from the outermost surface of the base material being coated with a carbide layer that contains a large amount of vanadium carbide having a higher surface pressure strength, making surface exfoliation of the carbide layer difficult at a higher surface pressure; the boundary layer between the carbide layer and the base material having a chromium-rich layer that contains a relatively large amount of chromium carbide with a higher bondability or fittability to the base material and the vanadium carbide, making exfoliation of the carbide layer from the base material difficult at a higher surface pressure. Thereby, wear resistance of a pin is further advanced.

In the prior art VC pin shown in figure 11, the outermost surface of the base material is coated with a vanadium carbide layer which has a higher surface pressure strength. In the boundary region between the base material and the vanadium carbide layer, the content of chromium carbide is low, which has a better bondability to the base material. Thereby, the vanadium carbide layer tends to be flaked off from the base material at a higher surface pressure. As a result, wear resistance of the pin is reduced.

Also, in the present invention, the carbide layer is preferably 10 microns or more in thickness, and the boundary layer is preferably 10 microns or less, or a few microns, in thickness. Because the thickness of the carbide layer needs 10 microns or more to prevent buckling or failure of the boundary layer under the carbide layer at a higher surface pressure, and a few microns of the thickness of the carbide layer would be sufficient to prevent exfoliation of the carbide layer from the base material.

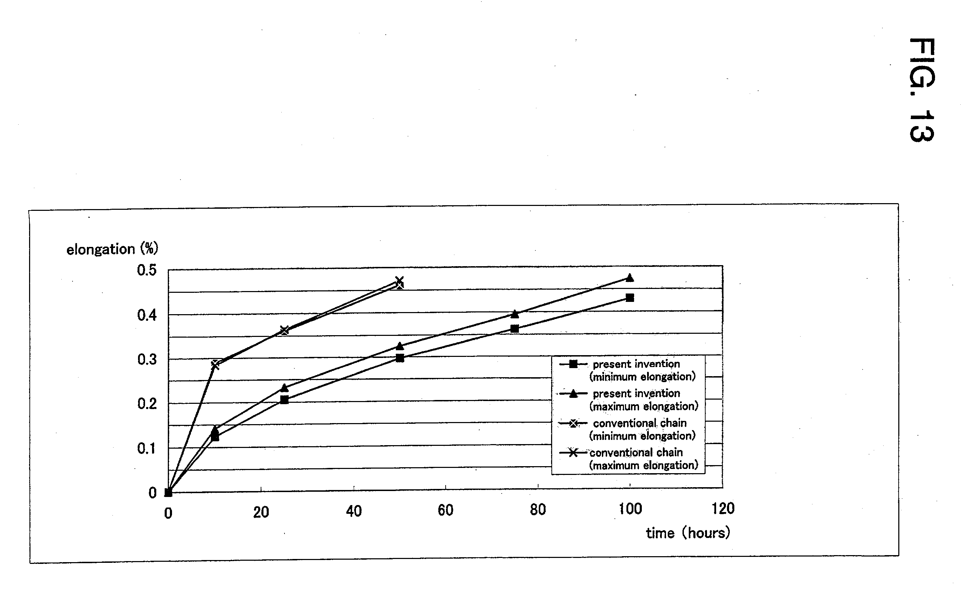

Figure 13 shows the result of a wear acceleration test of a silent chain comprised of the link plates 2 and the connecting pins 3 according to the present invention. In this test, a test chain is wrapped around a drive sprocket with 25 teeth and a driven sprocket with 25 teeth. After predetermined operating hours under the chain tension of 500(N), lubrication of 1 (liter) per minute at a temperature of 100(°C), and rotation of the drive sprocket at 6500(rpm), wear elongation of a chain is measured. Additionally, in this wear acceleration test, carbon of 1% by weight is added to the lubricant because we already know that wear hardly occurs when using normal lubricant.

In figure 13, two kinds of chains of the present invention are shown: one having expressed the maximum elongation; the other the minimum elongation. For comparison, results of a conventional silent chain that is comprised of the VC pin having composition shown in figure 11 and link plates having shaved pin apertures are also shown in figure 13. As is clearly seen from figure 13, in the case of the chain of the present invention, the range of wear elongation after operation of 100 hours is 0.425 to 0.47%, whereas in the case of the conventional chain, the range of wear elongation after operation of 50 hours is 0.46 to 0.47%. In such a manner, according to the chain of the present invention, wear elongation is remarkably decreased as is compared with the prior-art chain and wear resistance of the chain is improved. The increased wear resistance is due to the pin itself being advanced by the hardening treatment of the connecting pins, surface roughness of the pin apertures being improved by finishing process of the pin apertures of the link plates, thereby reducing the surface pressure against the pin apertures and decreasing wear to the pin apertures.

In the above-mentioned embodiment, a mixed layer of the vanadium carbide and the chromium carbide is formed on the outermost surface of the base material of a pin, but the present invention is not limited to this embodiment. At least any one of titanium carbide, niobium carbide, or tungsten carbide may be substituted for vanadium carbide.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A silent chain, comprising:
a) a plurality of link plates, each link plate having a pair of pin holes the pin holes being formed by a method comprising the steps of:
i) piercing holes in a blank sheet metal creating prepared holes,
ii) finishing the prepared holes by ironing and burnishing the prepared holes using a punch with a round edge portion at a tip thereof, and
b) a plurality of pins received by the pin holes of the link plates wherein the plurality of link plates are interleaved in lateral and longitudinal directions, and the plurality of pins connect adjacent rows of the links together.

2. A silent chain, comprising:
a) a plurality of link plates, each link plate having a pair of pin holes the pin holes being formed by a method comprising the steps of:
i) piercing holes in a blank sheet metal creating prepared holes,
ii) finishing the prepared holes by ironing and burnishing the prepared holes using a punch with a round edge portion at a tip thereof,
the link plates also having a pair of teeth made by blanking the sheet metal to form a back portion of the link plate, blanking the sheet metal to form an inside flank, an outside flank, and a crotch portion of the link plate, and shaving the inside flank, the outside flank, and the crotch portion simultaneously, and
b) a plurality of pins received by the pin holes of the link plates wherein the plurality of link plates are interleaved in lateral and longitudinal directions, and the plurality of pins connect adjacent rows of the links together.

3. The silent chain of claim 1 or 2, wherein the plurality of pins comprise a body made of a base material and a carbide layer formed on an outermost surface of the base material, and a boundary layer in a boundary region located between the carbide layer and the base material.

4. The silent chain of claim 3, wherein the carbide layer comprises vanadium carbide as a principal component and chromium carbide as a secondary component.

5. The silent chain of claim 4, wherein percentage content of the vanadium carbide decreases sharply and percentage content of the chromium carbide increases sharply in the boundary layer, from the base material to the carbide layer.

6. A silent chain, comprising:
a) a plurality of link plates, each link plate having a pair of pin holes the pin holes being formed by a method comprising the steps of:
i) piercing holes in a blank sheet metal creating prepared holes,
ii) finishing the prepared holes by ironing and burnishing the prepared holes using a punch with a round edge portion at a tip thereof,
the link plates also having a pair of teeth made by blanking the sheet metal to form a back portion of the link plate, blanking the sheet metal to form an inside flank, an outside flank, and a crotch portion of the link plate, and shaving the inside flank, the outside flank, and the crotch portion simultaneously, and
b) a plurality of pins received by the pin holes of the link plates made by forming a carbide layer on a base material of the plurality of pins, the carbide layer including vanadium carbide as its principal component and chromium carbide as its secondary component, the carbide layer being formed on the outermost surface of the base material, and forming a boundary layer in a boundary region located between the carbide layer and the base material; wherein percentage content of the vanadium carbide decreases sharply and percentage content of the chromium carbide increases sharply in the boundary layer, from the base material to the carbide layer, the plurality of link plates interleaved in lateral and longitudinal directions, the plurality of pins connecting adjacent rows of the links together.

7. The silent chain of any one of claims 3 to 6, wherein the carbide layer of the pin has a thickness of 10µm or more.

8. The silent chain of any one of claims 3 to 7, wherein the boundary layer of the pin has a thickness of 10µm or less.

9. The silent chain of any one of claims 3 to 8, wherein the base material is steel.
